# EUROPÄISCHE PATENTSCHRIFT

(11) **EP 2 786 235 B1**
(45) Veröffentlichungstag und Bekanntmachung des Hinweises auf die Patenterteilung: **06.05.2015**
(21) Anmeldenummer: 12788122.5
(22) Anmeldetag: 02.11.2012
(51) Int. Cl.: G06F 3/044, G06F 3/01, G06F 3/045

(54) **BETÄTIGUNGSVORRICHTUNG MIT EINER MANUELL ZU BEDIENENDEN BERÜHRUNGSSENSITIVEN OBERFLÄCHE**
ACTUATING DEVICE HAVING A TOUCH-SENSITIVE SURFACE WHICH CAN BE MANUALLY OPERATED
DISPOSITIF DE COMMANDE COMPORTANT UNE SURFACE TACTILE DESTINÉE À ÊTRE ACTIVÉE MANUELLEMENT

(30) Priorität: 30.11.2011 DE 102011119746
(43) Veröffentlichungstag der Anmeldung: 08.10.2014
(73) Patentinhaber: Audi AG, 85045 Ingolstadt (DE)
(72) Erfinder: SCHNEIDER, Johann, 85139 Wettstetten (DE); MÜLLER, Ulrich, 85055 Ingolstadt (DE)
(74) Vertreter: Brandt, Kai
(86) Internationale Anmeldenummer: PCT/EP2012/004584
(87) Internationale Veröffentlichungsnummer: WO 2013/079145

(56) Entgegenhaltungen:
- EP-A1- 2 261 781
- EP-A1- 2 290 510
- US-A1- 2010 057 235
- US-A1- 2011 141 047

## Beschreibung

Die Erfindung betrifft eine Betätigungsvorrichtung mit einer manuell zu bedienenden berührungssensitiven Oberfläche mit zugeordneter Aktuatorik zur Gabe eines haptischen Rückmeldungssignals in Abhängigkeit einer eine auslösende Betätigung darstellenden Berührung der Oberfläche, wobei über die Aktuatorik ein haptisches Rückmeldungssignal beim Lösen des Drucks auf die Oberfläche gebbar ist.

Derartige Betätigungsvorrichtungen mit einer berührungssensitiven Oberfläche kommen in Form von so genannten Touchscreens oder Touchpads vielfältig zum Einsatz. Sie können überall dort verwendet werden, wo über die Oberfläche Steuerungsbefehle und Ähnliches eingegeben werden sollen, beispielsweise an Bedientableaus oder -monitoren, aber auch an tragbaren Gerätschaften wie Mobiltelefonen, Tablet-PCs, Laptops und dergleichen.

Bei derartigen Betätigungsvorrichtungen handelt es sich um ein kombiniertes Ein- und Ausgabegerät, bei dem durch Berühren bestimmter, über ein angezeigtes Bild definierter Oberflächenbereiche der Betrieb bzw. Programmablauf eines Gerätes, wie oben angegeben, direkt gesteuert werden kann. Die Bedienung erfolgt dabei zumeist mit dem Finger, kann aber auch über einen Zeigestift vorgenommen werden.

Üblicherweise besteht eine solche berührungssensitive Oberfläche bzw. ein solcher Touchscreen aus drei Elementen. Zum einen dem Touchsensor, ferner einem zugeordneten Controller sowie einem Softwaretreiber. Hinter dem Touchsensor kann sich ein Bildschirm befinden, an dem das die sensitiven Eingabebereiche definierende Bild angezeigt wird, das durch den flächigen Touchsensor, also die eigentliche berührungssensitive Oberfläche, hindurch sichtbar ist. Der Touchsensor selbst hat zumeist eine berühungsempfindliche Schicht, bestehend aus optischem Glas oder einer flexiblen Polyesterschicht. Zur Erfassung einer signalgebenden Berührung fließt üblicherweise ein Strom durch respektive über diese Oberfläche, was bei Berührung mit dem Finger oder dergleichen einen Spannungswechsel oder einen Signalhub hervorruft, der zur Ermittlung der berührten Position und damit zur Erfassung eines Eingabebefehls erfasst und ausgewertet wird. Mittels des Controllers werden derartige Benutzereingaben auf dem Touchsensor, letztlich also der berührungssensitiven Oberfläche erfasst und als Signale weitergegeben, welche Signale über die Software, die geräteseitig installiert ist, zur Interpretation der vom Controller gelieferten, berührungsbezogenen Signale verarbeitet werden.

Der Aufbau des Touchscreens oder Touchpads, also der berührungssensitiven Oberfläche selbst kann je nach zugrundeliegender Technologie unterschiedlich sein. Bekannt sind beispielsweise resistive Touchoberflächen, bestehend aus einer äußeren Kunststofffolienschicht und einer inneren Glas- oder Kunststoffscheibe, die über Abstandshalter getrennt sind. Die einander zugeordneten Flächen sind mit einer Indium-Zinn-Oxid-Schicht (ITO-Schicht) belegt. ITO ist ein lichtdurchlässiger Halbleiter. An eine oder beide ITO-Schichten wird eine geringe Prüfspannung angelegt, die zur Ansteuerung genutzt wird. Wird nun lokal auf die außenliegende Schicht gedrückt, so ergibt sich ein lokaler elektrischer Kontakt zwischen den ITO-Schichten, es entstehe ein elektrischer Widerstand, dessen Einwirkung auf das Spannungsverhältnis der abgegriffenen Spannung eine Ermittlung des Berührungspunktes zum jeweiligen Rand der Schicht ermöglicht. Der grundsätzliche Aufbau eines solchen resisitven Touchscreens ist bekannt.

Eine weitere grundlegende Bauweise ist die einer kapazitiven Touchoberfläche. Diese umfasst ein mit einem durchsichtigen Metalloxid, üblicherweise wiederum eine ITO-Schicht, belegtes Glassubstrat. An den Ecken des Sensors sind Elektroden vorgesehen, an die eine Prüf- oder Arbeitsspannung angelegt wird, mittels welcher ein gleichmäßiges elektrisches Feld erzeugt wird. Die Oberfläche wird hierüber statisch aufgeladen. Eine Berührung mit einem kapazitiven Medium, wie es ein Finger darstellt, löst einen Ladungstransport aus. Kapazitiv gebundene Ladung geht auf den Finger über, es kommt zu einem Stromfluss, der an den Ecken des Touchscreens gemessen wird. Es kommt folglich zu einer Störung des elektrischen Feldes, der Stromfluss steht in direktem Verhältnis zu der Position der Berührung. Der zugeordnete Controller wiederum erfasst die entsprechenden Signale, die Software wertet sie aus.

Als dritte grundlegende Bauform sind auch optische Touchoberflächen bekannt. Diese umfassen eine Matrix bestehend aus Leuchtdioden und Fotodetektoren. Die Leuchtdioden bestrahlen die Detektoren auf der gegenüberliegenden Seite. Eine Oberflächenberührung unterbricht den Lichtstrahl und sorgt somit für einen messbaren Signalabfall, der ohne Weiteres lokal aufgelöst werden kann. Das heißt, der Controller lokalisiert den Berührungspunkt. Auch diese grundlegende Touchscreen-Bauform ist hinlänglich bekannt.

Bekannt sind ferner Touchoberflächen, die dem Benutzer ein haptisches (taktiles) Rückmeldungssignal geben, wenn er erfolgreich eine Signaleingabe vorgenommen hat und er den Druck auf die Oberfläche löst. Diese haptische oder taktile Rückmeldungssignal dient dazu, dem Benutzer die erfolgreiche Signal- oder Befehlseingabe spürbar zu signalisieren. Hierzu ist eine geeignete Aktuatorik vorgesehen. Bekannt sind dabei Inertialaktuatoren, üblicherweise bestehend aus einem Motor, der eine exzentrisch gelagerte Masse dreht, oder umfassend ein Feder-Masse-System, das schwingfähig ist.

Alternativ sind piezoelektrische Aktuatoren bekannt, die in sehr dünner Bauform mit sehr schneller Reaktionszeit realisiert werden können. Bei Einsatz eines solchen piezoelektrischen Aktuators, der beispielsweise auch scheibenförmig ausgeführt werden kann, wird die Touchoberfläche entweder gebogen oder gegen eine andere Fläche gedrückt, sodass eine Verschiebebewegung entsteht.

Mittels einer solchen Aktuatorik ist es also möglich, den Touchscreen oder das Touchpad, also die berührungssensitive Oberfläche, so in Bewegung zu versetzen, dass es bei Druckausübung auf die Oberfläche für den Benutzer zu einem haptisch empfundenen "Klick" kommt. Dabei ist es möglich, sowohl beim Drücken auf die Oberfläche (push) als auch beim Lösen des Drucks auf die Oberfläche (release) jeweils eine separate aktuatorische Bewegung zu erzeugen. Um dabei den mechanischen Klick so realitätsnah wie möglich nachzubilden, ist es erforderlich, die Auslösung der Aktuatorik so zeitnah wie möglich erfolgen zu lassen. Während der "Push"-Klick über unter dem Touchscreen oder Touchpad befindliche Druckkraft-Sensoren relativ verzögerungsfrei erkannt werden kann, kann es beim "Release"-Klick, also dem Wegführen des Fingers von der Oberfläche, aufgrund der trägen Systemmasse zu Verzögerungen kommen, sodass ein unpräzises Klickgefühl entsteht.

Bekannt ist aus der Patentschrift US2011141047 eine Betätigungsvorrichtung mit einer berührungssensitiven Oberfläche und zugeordneter Aktuatorik zur Gabe eines haptischen Rückmeldungssignals in Abhängigkeit einer eine auslösende Betätigung darstellenden Berührung der Oberfläche mit einem auf die Oberfläche drückenden Finger. Bei Erfassung einer hinreichend schnellen Vergrößerung der Auflagefläche des auf die Oberfläche drückenden Fingers und anschließendem Verweilen des Fingers auf der Oberfläche wird eine Befehlseingabe ausgelöst. Beim nachfolgenden Lösen des Drucks auf die Oberfläche ist über die Aktuatorik ein haptisches Rückmeldungssignal gebbar, wobei die Gabe des Rückmeldungssignals in Abhängigkeit einer erfassten, hinreichend schnellen Verkleinerung der Auflagefläche des auf die Oberfläche drückenden Fingers erfolgt.

Aus der Patentschrift US2010057235 ist eine elektronische Musikwiedergabevorrichtung bekannt, die eine berührungssensitive Oberfläche mit einen Drucksensor umfasst. Ikonisch dargestellte Musiktitel können über die berührungssensitive Oberfläche mit einem Finger ausgewählt werden, wobei es der Drucksensor ermöglicht, zwischen drei Kontaktzuständen, nämlich einer bloßen Berührung der Oberfläche mit dem Finger, sowie leichtem und starkem Druck auf die Oberfläche, zu unterscheiden. Um die Sicherheit, mit der diese drei Kontaktzustände über den Drucksensor ermittelt werden, noch zu steigern, kann zusätzlich auch die Auflagefläche des auf die Oberfläche drückenden Fingers berücksichtigt werden.

Die Patentschrift EP2290510 beschreibt eine Betätigungsvorrichtung mit einer berührungssensitiven Oberfläche zur Befehlseingabe. Während einer Berührung der Oberfläche mit einem auf die Oberfläche drückenden Finger wird kontinuierlich die Auflagefläche des Fingers bestimmt und mit der Auflagefläche zu Beginn der Berührung verglichen. Überschreitet die relative Flächenvergrößerung einen vorgegebenen Schwellwert, wird die Befehlseingabe ausgelöst.

Der Erfindung liegt daher die Aufgabe zugrunde, eine Betätigungsvorrichtung anzugeben, die eine präzisere Gabe eines Rückmeldungssignals beim Lösen des Drucks auf die Oberfläche, also des "Release"-Klicks, ermöglicht.

Zur Lösung dieses Problems ist eine Betätigungsvorrichtung gemäß Anspruch 1 vorgesehen.

Anders als im bisherigen Stand der Technik, wo die Gabe des "Release"-Klick-Rückmeldungssignals in Abhängigkeit einer erfassten Druckänderung erfolgt, wird erfindungsgemäß eine Änderung der Auflagefläche des auf die Oberflächen des Fingers der Rückmeldungssignalgabe zugrunde gelegt. Der Benutzer drückt mit dem Finger auf die Oberfläche, was zur Befehlseingabe führt. Durch den zu erzeugenden Mindestdruck ergibt sich folglich eine entsprechende Auflagefläche des Fingers auf der Oberfläche, das heißt, dass sich bei Druckausübung auf die Fläche die Auflagefläche des Fingers vergrößert. Wird nun der Druck reduziert, so kommt es zwangsläufig zu einer Flächenverkleinerung, da der weiche Finger bei geringerem Druck nicht mehr so breit gedrückt wird, wie bei größerem Druck. Es kommt folglich zu einer relativen Flächenverkleinerung respektive relativen Flächenveränderung. Erfindungsgemäß wird nun über ein geeignetes Erfassungsmittel diese Veränderung der Auflagefläche detektiert. Wird eine Flächenveränderung erfasst, die mindestens einem definierten Änderungsgrad entspricht, so wird dies als auslösende Randbedingung für die Gabe des taktilen Rückmeldungssignals angesehen, das dann umgehend gegeben werden kann. Das heißt, sobald das System eine Änderung der Finger-Auflagefläche im Rahmen der vorgegebenen Parameter erkennt, wird der "Release"-Klick, also das "Release"-Rückmeldungssignal ausgelöst und erfolgt somit noch vor einer Auslösung durch die Druckkraftsensoren, die vorzugsweise infolge ihrer 100 %-igen Erkennungssicherheit den "Release"-Fall als redundante Erfassungslösung zusätzlich sensieren sollten. Ein besonderer Vorteil der erfindungsgemäßen Steuerungsweise gegenüber dem Stand der Technik ist darüber hinaus, dass die genaue Auflagefläche bei der fixen Auslösekraft, die zur Befehlseingabe erforderlich ist, bekannt ist, das heißt, dass unmittelbar bei Erfassung des eigentlichen durch die Berührung gegebenen Eingabebefehls, wenn also ein hinreichender Druck gegeben ist, auch sofort die Auflagefläche zu diesem Zeitpunkt erfasst wird, wonach eine im definierten Maß erfolgende Änderung als Lösung des Fingers interpretiert werden kann. Da des Weiteren die relative Veränderung der Auflagefläche ermittelt wird, spielt folglich die Größe des Fingers für die Auslösung des Rückmeldungssignals keine Rolle.

Die berührungssensitive Oberfläche kann gemäß einer ersten Erfindungsausgestaltung einen kapazitiven Touchsensor beinhalten. Dieser kapazitive Touchsensor bietet die Möglichkeit, die Fingerauflagefläche und deren Änderung zu erfassen. Wie beschrieben ist dem Touchsensor ein entsprechender Controller nebst zugeordneter Software zugeordnet. Die Software ist nun derart ausgelegt, dass anhand der vom Controller gegebenen, berührungsabhängigen Signale die Kontaktfläche erfasst und folglich auch eine entsprechende Flächenveränderung erfasst werden kann. Bei einem kapazitivem Touchsensor führt eine Berührung zu einem messbaren Strom, wobei der gemessene Strom abhängig von der Berührungsfläche, mithin also der Fingerauflagefläche ist. Durch das Auflegen des Fingers ergibt sich eine Änderung der Kapazität des gebildeten Kondensators, wobei sich die Kapazität in Abhängigkeit der Auflagefläche ändert. Durch entsprechende Auswertung der gegebenen Messsignale kann folglich aus der "Strombilanz" die Veränderung der Auflagefläche bestimmt werden.

Eine alternative Ausgestaltung sieht vor, die berührungssensitive Oberfläche mittels eines resistiven Touchsensors zu realisieren. Bei Drücken auf die Oberfläche kommt es hier zu einem elektrischen Kontakt zwischen den einander gegenüberliegenden Schichten, es entsteht ein elektrischer Widerstand, der Auswirkung auf das Spannungsverhältnis hat. Die gemessene Spannung ist jedoch auch hier letztlich abhängig von der Größe der Kontaktfläche, über welche sich die beiden Schichten berühren, mithin also von der Fingerauflagefläche, da der elektrische Widerstand letztlich flächenabhängig ist. Über die entsprechende Auswertesoftware kann folglich auch hier eine entsprechende Flächenerfassung respektive Flächenänderungserfassung über die gegebenen Messsignale erfolgen.

Daneben betrifft die Erfindung ein Verfahren zum Betrieb einer Betätigungsvorrichtung gemäß Anspruch 4.

Das Erfassungsmittel ist, wie vorstehend bereits ausgeführt, letztlich die über einen entsprechende Touchsensor realisierte berührungssensitive Oberfläche selbst in Verbindung mit einer entsprechend ausgelegten Signalverarbeitungssoftware, die die gegebenen Messsignale im Hinblick auf eine Flächenabhängigkeit auswertet. Das heißt, dass die Fingerauflagefläche respektive deren Änderung letztlich indirekt über die Auswertung der gegebenen Messsignale ermittelt wird.

Weitere Vorteile, Merkmale und Einzelheiten der Erfindung ergeben sich aus dem im Folgenden beschriebenen Ausführungsbeispiel sowie anhand der Zeichnung. Dabei zeigen:
- Fig. 1: eine Seitenansicht einer erfindungsgemäßen Betätigungsvorrichtung in Form einer Prinzipdarstellung, und
- Fig. 2: eine Aufsicht auf die Betätigungsvorrichtung aus Fig. 1.

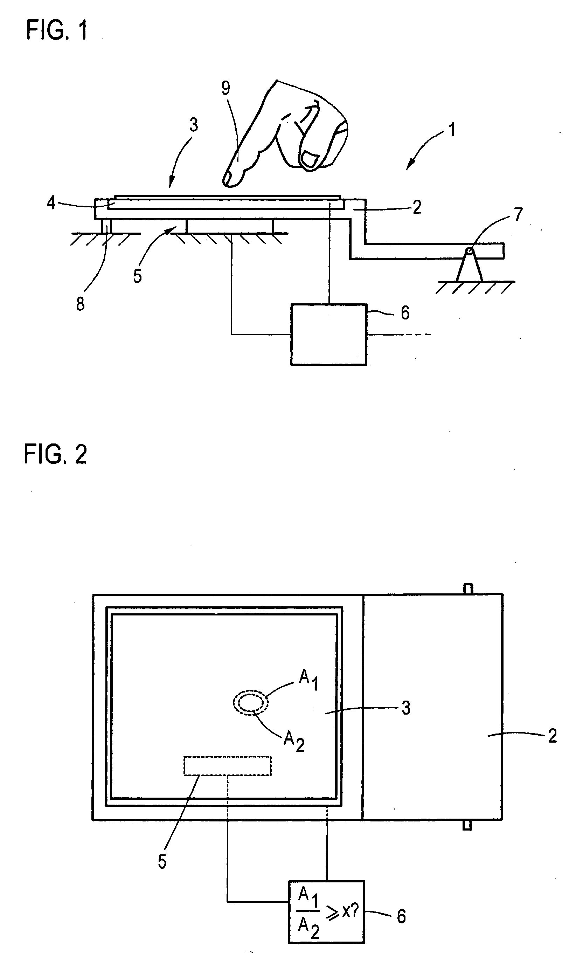

Fig. 1 zeigt in Form einer Prinzipdarstellung eine erfindungsgemäße Betätigungsvorrichtung 1, umfassend einen Träger 2, an dem eine berührungssensitive Oberfläche 3, also ein Touchscreen oder Touchpad, vorgesehen ist. Der berührungssensitiven Oberfläche kann eine Anzeigeeinrichtung 4, beispielsweise ein LCD-Bildschirm zugeordnet sein, über den durch die berührungssensitive Oberfläche 3 sichtbare Bilddarstellungen angezeigt werden können, mittels denen entsprechende Flächenbereiche definiert werden können, die als Eingabefelder dienen können. Alternativ kann die entsprechende grafische Oberfläche auf einem separaten Bildschirm z. B. in der Instrumententafel dargestellt werden.

Unterhalb des Trägers 2 ist eine Aktuatorik 5 vorgesehen, beispielsweise eine Vibrationseinrichtung auf Basis eines Elektromagneten, mehrerer Piezoaktoren oder eines Exzentermotors. Über diese Aktuatorik kann ein haptisches Rückmeldungssignal an den Träger 2 angelegt werden, also ein Vibrationssignal, das der Bediener über die berührungssensitive Oberfläche 3, wenn er auf diese drückt, spürt. Dieses Rückmeldungssignal wird in jedem Fall dann gegeben, wenn der Bediener nach Gabe eines Eingabesignals durch Drücken auf die Oberfläche den Finger wieder löst (Release-Signal), es kann aber auch dann gegeben werden, wenn der Bediener das Eingabesignal erfolgreich gegeben hat (Push-Signal).

Vorgesehen ist ferner eine Steuerungseinrichtung 6, die den gesamten Betrieb der Betätigungsvorrichtung steuert. Die Steuerungseinrichtung 6 ist mit einer nachgeschalteten (nicht gezeigten) Elektronik verbunden, um entsprechende Steuerbefehle zu übertragen oder zu empfangen. Die Steuerungseinrichtung 6 umfasst einen nicht näher gezeigten Controller nebst entsprechender Verarbeitungssoftware, die insbesondere im erfindungsgemäßen Fall dazu dient, neben der Auswertung der eigentlichen vom Controller gelieferten und an der berührungssensitiven Oberfläche 3 abgegriffenen Signal hinsichtlich des Eingabebefehls auch zu ermitteln, wie groß die Auflagefläche des Fingers auf der berührungssensitiven Oberfläche ist und wie sich die Fläche zeitlich verändert. Denn eine entsprechende zeitliche Veränderung der Auflagefläche wird erfindungsgemäß als auslösende Randbedingung für die Gabe eines haptischen Rückmeldungssignals über die Aktuatorik 5 verwendet.

Bei der berührungssensitiven Oberfläche 3, also dem Touchscreen oder Touchpad, handelt es sich beispielsweise um einen kapazitiven Touchsensor. Er umfasst eine Glasfläche, die mit einer transparenten ITO-Schicht geringer Stärke belegt ist. An den Ecken der Schicht sind Elektroden vorgesehen, an die eine Spannung angelegt wird, worüber ein gleichmäßiges elektrisches Feld erzeugt wird und folglich die Oberfläche statisch aufgeladen wird. Wird nun die Oberfläche mit dem Finger, der ein kapazitives Medium darstellt, berührt, so fließt Ladung von der Oberfläche auf den Finger, es kommt zu einem Ladungstransport, mithin also zu einem Stromfluss, der über die eckseitigen Sensoren gemessen werden kann. Der Touchsensor bildet also eine Kondensatorstruktur, die über den Finger lokal entladen wird. Die hierüber gegebene Störung des elektrischen Felds kann über die eckseitigen Sensoren lokal aufgelöst werden, das heißt, dass anhand des Controllers in Verbindung mit der nachgeschalteten Software in der Steuerungseinrichtung 6 also erfasst werden kann, wo über die Gesamtfläche der Oberfläche 3 die Berührung erfolgte. Der grundsätzliche Aufbau eines solchen kapazitiven Touchsensors (und natürlich auch entsprechende Modifikationen, die allesamt auf dem kapazitiven Funktionsprinzip beruhen) sind hinlänglich bekannt und bedürfen keiner näheren Beschreibung.

Der Träger 2 selbst ist an einem Ende um eine Drehachse 7 schwenkbar gelagert, ferner ist er am anderen Ende über einen Drucksensor 8 aufgelagert. Wird nun auf die Oberfläche gedrückt, so kann der Träger 2 nebst Oberfläche 3 um die Achse 7 verschwenken, über den Drucksensor 8 wird erfasst, ob ein hinreichender Druck auf die Oberfläche gegeben ist, der ausreicht, die Berührung als aktive Befehlseingabe zu sehen, was nur dann der Fall ist, wenn eben ein gewisser Mindestdruck gegeben ist. Grundsätzlich besteht hier die Möglichkeit, nachdem über die Steuerungseinrichtung 6 genauestens der Punkt bestimmt werden kann, wo mit dem Finger auf die Oberfläche 3 gedrückt wird, den Abstand dieses Punktes zur Achse 7 zu ermitteln, und daraus resultierend zu definieren, welcher Druck an dieser Stelle erforderlich ist, damit ein Eingabesignal als gegeben angesehen wird, um über die Abstandsermittlung hierüber sicherzustellen, dass letztlich die Auslösekraft, also die Kraft, mit der zur Gabe eines aktiven Eingabebefehls auf die Oberfläche 3 zu drücken ist, an jeder Stelle über die Fläche der Oberfläche 3 gleich ist.

Wie beschrieben erfolgt bei der erfindungsgemäßen Betätigungsvorrichtung die Gabe des haptischen oder taktilen Rückmeldungssignals beim Lösen des Drucks auf die Oberfläche in Abhängigkeit einer erfassten Änderung der Auflagefläche des auf die Oberfläche drückenden Fingers 9. Diese Auflagefläche kann über die Steuerungseinrichtung 6 anhand einer geeigneten Auswertesoftware, die die vom Controller gegebenen Messsignale, die an der berührungssensitiven Oberfläche beispielsweise über die vier Ecksensoren abgegriffen werden, auswertet, ermittelt werden. Bei einer kapazitiven Oberfläche kommt es wie ausgeführt zu Entladungseffekten, wobei die Entladung respektive der Ladungstransport mit der Auflagefläche des Fingers, also der Zone, in der ein Ladungsübergang möglich ist, variiert. Drückt der Benutzer fest auf die Oberfläche, so wird der Finger "breitgedrückt", es ergibt sich eine große Fingerauflagefläche A₁, wie in Fig. 2 gestrichelt gezeigt ist. Die Steuerungseinrichtung 6 ist nun in der Lage, beispielsweise genau zu dem Zeitpunkt, zu dem über den Drucksensor 8 ein hinreichender, die Befehlseingabe auslösender Druck erfasst wird, die Flächenbestimmung vorzunehmen, also die Fläche A₁ zu bestimmen. Fortan werden laufend die Sensorsignale aufgenommen, um durch weitere Auswertung dieser Sensorsignale kontinuierlich die Auflagefläche zu ermitteln.

Löst der Bediener den Finger von der Oberfläche 3, so nimmt der Fingerdruck ab, was gleichbedeutend mit einer Verkleinerung der Auflagefläche ist. Diese wird wie beschrieben kontinuierlich gemessen. Die gemessene Auflagefläche wird laufend ins Verhältnis mit der bereits bekannten Auflagefläche A₁ gesetzt und das Verhältnis dahingehend überprüft, ob es größer oder gleich einem definierten Verhältniswert ist, der eine hinreichende Abnahme der Auflagefläche beschreibt. Die sich verkleinernde Auflagefläche ist in Fig. 2 mit der stilisierten Fläche A₂ dargestellt.

Sobald nun steuerungsseitig ermittelt wird, dass das Verhältnis A₁/A₂ ≥ x ist (wobei x = vorbestimmter Verhältniswert), so wird dies als auslösende Randbedingung für das "Release"-Signal, also das beim Lösen zu gebende haptische Rückmeldungssignal gesehen. Die Steuerungseinrichtung 6 steuert daraufhin umgehend die Aktuatorik 5 an, um das haptische Vibrationssignal als Rückmeldungssignal zu geben. Der Bediener spürt dieses Signal, sein Finger liegt ja nach wie vor noch auf der Oberfläche 3 auf, wenngleich er im Begriff ist, ihn abzuheben.

Redundant zu der beschriebenen Art der Erfassung des "Release"-Vorgangs erfolgt noch kontinuierlich eine Erfassung des Drucks über den Drucksensor 8 seitens der Steuerungseinrichtung 6. Denn mit dem Anheben des Fingers einher geht natürlich auch eine Reduzierung des aufgebrachten und über den Drucksensor 8 erfassten Drucks. Dieser Vorgang ist jedoch aufgrund der trägen Masse der Betätigungsvorrichtung 1 gegebenenfalls etwas verzögert, sodass die Gabe des "Release"-Signals ausschließlich auf die Druckerfassung zur verzögerten und damit etwas unpräzisen Rückmeldungssignalen führen kann. Dem wird dadurch begegnet, dass erfindungsgemäß eben die Flächenveränderung als auslösende Randbedingung erfasst wird, was hochpräzise und äußerst schnell und damit zeitnah erfolgen kann. Gleichwohl ist die redundante Überprüfung über das Drucksignal zweckmäßig, sollte es im Rahmen der Flächenerfassung zu Fehlern kommen.

Wenngleich vorstehend die Verwendung einer berührungssensitiven Oberfläche in Form eines kapazitiven Touchscreens beschrieben wurde, besteht selbstverständlich die Möglichkeit, diese Oberfläche 3 auch über einen resistiven Touchscreen oder einen optischen Touchscreen zu bilden. All Touchscreenarten lassen eine Auswertung der oberflächenseitig erfassten, berührungsabhängigen Signale dahingehend zu, dass eine Flächenerfassung möglich ist und gestützt hierauf eine entsprechende Erfassung einer relativen Flächenveränderung möglich ist, die Grundlage der Bestimmung des Gabezeitpunkts des haptischen "Release"-Rückmeldungssignals ist.

## Patentansprüche

1. Betätigungsvorrichtung (1) mit einer manuell zu bedienenden berührungs-sensitiven Oberfläche (3) mit zugeordneter Aktuatorik (5) zur Gabe eines haptischen Rückmeldungssignals in Abhängigkeit einer eine auslösende Betätigung darstellenden Berührung der Oberfläche (3) mittels eines auf die Oberfläche (3) drückenden Fingers (9), wobei über die Aktuatorik (5) ein haptisches Rückmeldungssignal beim Lösen des Drucks auf die Oberfläche (3) gebbar ist, sowie mit wenigstens einem Druckkraftsensor (8) zur Erfassung des durch Drücken auf die Oberfläche (3) mittels des Fingers (9) gegebenen Drucks, wobei bei Erfassung eines hinreichenden Drucks eine Befehlseingabe ausgelöst wird, sowie eine den Betrieb steuernde Steuerungseinrichtung (6),
wobei die Gabe des haptischen Rückmeldungssignals in Abhängigkeit einer erfassten Verkleinerung der Auflagefläche (A₁, A₂) des auf die Oberfläche (3) drückenden Fingers (9) erfolgt, wobei zu dem Zeitpunkt, zu dem der hinreichende, die Befehlseingabe auslösende Druck erfasst wird, seitens der Steuerungseinrichtung (6) eine Bestimmung einer ersten Auflagefläche A₁ erfolgt, wonach laufend eine zweite Auflagefläche A₂ und das Verhältnis A₁/A₂ ermittelt wird, solange, bis A₁/A₂ ≥ x ist, wobei x ein vorbestimmter Verhältniswert ist, wonach die Gabe des haptischen Rückmeldungssignals erfolgt.

2. Betätigungsvorrichtung nach Anspruch 1,
**dadurch gekennzeichnet,**
**dass** die berührungssensitive Oberfläche (3) ein kapazitiver Touchscreen oder Touchpad ist.

3. Betätigungsvorrichtung nach Anspruch 1,
**dadurch gekennzeichnet,**
**dass** die berührungssensitive Oberfläche (3) ein resistiver Touchscreen oder Touchpad ist.

4. Verfahren zum Betrieb einer Betätigungsvorrichtung (1) mit einer manuell zu bedienenden berührungssensitiven Oberfläche (3) mit zugeordneter Aktuatorik (5) zur Gabe eines haptischen Rückmeldungssignals in Abhängigkeit einer eine auslösende Betätigung darstellenden Berührung der Oberfläche (3) mittels eines auf die Oberfläche (3) drückenden Fingers (9), wobei über die Aktuatorik (5) ein haptisches Rückmeldungssignal beim Lösen des Drucks auf die Oberfläche (3) gegeben wird, sowie mit wenigstens einem Druckkraftsensor (8) zur Erfassung des durch Drücken auf die Oberfläche (3) mittels des Fingers (9) gegebenen Drucks, wobei bei Erfassung eines hinreichenden Drucks eine Befehlseingabe ausgelöst wird, sowie eine den Betrieb steuernde Steuerungseinrichtung (6), wobei
bei Ermittlung einer definierten Verkleinerung der Auflagefläche (A₁, A₂) des auf die Oberfläche (3) drückenden Fingers (9) die Gabe des haptischen Rückmeldungssignals ausgelöst wird, wobei zu dem Zeitpunkt, zu dem der hinreichende, die Befehlseingabe auslösende Druck erfasst wird, seitens der Steuerungseinrichtung (6) eine Bestimmung einer ersten Auflagefläche A₁ erfolgt, wonach laufend eine zweite Auflagefläche A₂ und das Verhältnis A₁/A₂ ermittelt wird, solange, bis A₁/A₂ ≥ x ist, wobei x ein vorbestimmter Verhältniswert ist, wonach die Gabe des haptischen Rückmeldungssignals erfolgt.

## Claims

1. Operating device (1) comprising a manually operable touch-sensitive surface (3) having an associated actuator system (5) for providing a haptic feedback signal on the basis of contact being made with the surface (3), denoting a triggered operation, by a finger (9) pressing on the surface (3), it being possible for the actuator system (5) to provide a haptic feedback signal when the pressure on the surface (3) is released, and comprising at least one compressive force sensor (8) for detecting the pressure applied by pressing the finger (9) on the surface (3), a command input being triggered when sufficient pressure is detected, and a control means (6) which controls operation, wherein the haptic feedback signal is provided on the basis of a detected reduction in the contact surface (A₁, A₂) of the finger (9) pressing on the surface (3), a first contact surface A₁ being determined by the control means (6) at the point when sufficient pressure, which triggers the command input, is detected, after which first contact surface determination a second contact surface A₂ and the ratio A₁:A₂ are continuously determined until A₁:A₂ is ≥x, x being a predetermined ratio, after which the haptic feedback signal is provided.

2. Operating device according to claim 1, **characterised in that** the touch-sensitive surface (3) is a capacitive touchscreen or touchpad.

3. Operating device according to claim 1, **characterised in that** the touch-sensitive surface (3) is a resistive touchscreen or touchpad.

4. Method for operating an operating device (1) having a manually operable touch-sensitive surface (3) comprising an associated actuator system (5) for providing a haptic feedback signal on the basis of contact being made with the surface (3), denoting a triggered operation, by means of a finger (9) pressing on the surface (3), a haptic feedback signal being provided by the actuator system (5) when the pressure on the surface (3) is released, and comprising at least one compressive force sensor (8) for detecting the pressure applied by the finger (9) pressing on the surface (3), a command input being triggered when sufficient pressure is detected, and a control means (6) which controls operation,
wherein the provision of the haptic feedback signal is triggered when a defined reduction in the contact surface (A₁, A₂) of the finger (9) pressing on the surface (3) is determined, a first contact surface A₁ being determined by the control means (6) at the point when sufficient pressure, which triggers the command input, is detected, after which first contact surface determination a second contact surface A₂ and the ratio A₁:A₂ are continuously determined until A₁:A₂ is ≥x, x being a predetermined ratio, after which the haptic feedback signal is provided.

## Revendications

1. Dispositif de commande (1) comprenant une surface tactile (3) à activer manuellement avec des actionneurs affectés (5) pour délivrer un signal d'accusé de réception haptique en fonction d'un contact de la surface (3) par pression d'un doigt (9) sur la surface (3) représentant une commande de déclenchement, dans lequel, via les actionneurs (5), un signal d'accusé de réception haptique peut être délivré à la surface (3) lors du relâchement de la pression, ainsi qu'au moins un capteur de force de pression (8) pour détecter la pression exercée par la compression de la surface (3) au moyen du doigt (9), dans lequel, lors de la détection d'une pression suffisante, une entrée d'ordres se déclenche, ainsi qu'un dispositif de commande (6) commandant le fonctionnement,
**caractérisé en ce que** :
la délivrance du signal d'accusé de réception haptique se fait en fonction d'une réduction détectée de la surface d'application (A₁, A₂) du doigt (9) pressant sur la surface (3), dans lequel, au moment où la pression suffisante déclenchant l'entrée d'ordres est détectée, il se produit, côté dispositif de commande (6), une détermination d'une première surface d'application A₁, après quoi on détecte normalement une seconde surface d'application A₂ et le rapport A₁/A₂ jusqu'à ce que A₁/A₂ ≥ x, où x est une valeur de rapport prédéterminée, après quoi se fait la délivrance du signal d'accusé de réception haptique.

2. Dispositif de commande selon la revendication 1, **caractérisé en ce que** :
la surface tactile (3) est un écran tactile ou un bloc à effleurement capacitif.

3. Dispositif de commande selon la revendication 1, **caractérisé en ce que** :
La surface tactile (3) est un écran tactile ou un bloc à effleurement résistif.

4. Procédé de fonctionnement d'un dispositif de commande (1) comprenant une surface tactile (3) à activer manuellement avec des actionneurs affectés (5) pour délivrer un signal d'accusé de réception haptique en fonction d'un contact de la surface (3) par pression d'un doigt (9) sur la surface (3) représentant une commande de déclenchement, dans lequel, via les actionneurs (5), un signal d'accusé de réception haptique est délivré à la surface (3) lors du relâchement de la pression, ainsi qu'au moins un capteur de force de pression (8) pour détecter la pression exercée par la compression de la surface (3) au moyen du doigt (9), dans lequel, lors de la détection d'une pression suffisante, une entrée d'ordres se déclenche, ainsi qu'un dispositif de commande (6) commandant le fonctionnement,
dans lequel :
lors de la détermination d'une réduction définie de la surface d'application (A₁, A₂) du doigt (9) pressant sur la surface (3), la délivrance du signal d'accusé de réception haptique est déclenchée, dans lequel, au moment où la pression suffisante déclenchant l'entrée d'ordres est détectée, il se produit, côté dispositif de commande (6), une détermination d'une première surface d'application A₁, après quoi on détecte normalement une seconde surface d'application A₂ et le rapport A₁/A₂ jusqu'à ce que A₁/A₂ ≥ x, où x est une valeur de rapport prédéterminée, après quoi se fait la délivrance du signal d'accusé de réception haptique.
